# EUROPÄISCHE PATENTSCHRIFT

(11) **EP 0 952 648 B1**
(45) Veröffentlichungstag und Bekanntmachung des Hinweises auf die Patenterteilung: **23.05.2007**
(21) Anmeldenummer: 99104631.9
(22) Anmeldetag: 09.03.1999
(51) Int. Cl.: H02B 1/30

(54) **Rahmenschenkel für ein Rahmengestell eines Schaltschrankes**
Frame member for an electrical cabinet frame
Montant pour le chassis d'une armoire de distribution

(30) Priorität: 20.04.1998 DE 19818603
(43) Veröffentlichungstag der Anmeldung: 27.10.1999
(73) Patentinhaber: Rittal-Werk Rudolf Loh GmbH & Co. KG, 35745 Herborn (DE)
(72) Erfinder: Nicolai, Walter, 35418 Buseck 1 (DE); Münch, Udo, 35764 Sinn (DE); Vogel, Georg, 71701 Schwieberdingen (DE)
(74) Vertreter: Fleck, Hermann-Joseph

(56) Entgegenhaltungen:
- EP-A- 0 751 595
- DE-C- 4 439 551
- DE-U- 29 623 065

## Beschreibung

Die Erfindung betrifft ein Rahmengestell für einen Schaltschrank.

An ein Rahmengestell eines Schaltschrankes sind die unterschiedlichsten Anforderungen gestellt, die alle durch die Querschnittsform der verwendeten Rahmenschenkel erfüllt werden müssen. Dabei können im Bereich des Boden- oder Deckrahmens durchaus in der Querschnittsform der vertikalen Rahmenschenkel abweichende Rahmenschenkel verwendet werden. Gerade bei den vertikal ausgerichteten Rahmenschenkeln des Rahmengestelles sind möglichst viele in mehrere Richtungen ausgerichtete Befestigungsmöglichkeiten gefordert. Außerdem muß mit möglichst geringem Materialaufwand für den Rahmenschenkel eine optimale Festigkeit, vorzugsweise Verwindungssteifigkeit erreicht und dennoch eine einfache Herstellung des Rahmenschenkels ermöglicht werden. Darüberhinaus muß im Bereich der vertikalen Außeneckkanten des Rahmengestelles genügend Freiraum zur Anbringung der Scharnierleiste einer Schranktür und zur Ausbildung und Unterbringung von Dichtungselementen für anzubringende Seitenwände oder der Schrankrückwand vorhanden sein.

Es sind eine Vielzahl von Rahmenschenkeln für ein Rahmengestell eines Schaltschrankes bekannt, die zum Teil die vorstehend genannten Anforderungen erfüllen, jedoch nicht in allen Belangen eine befriedigende Lösung bieten. Dabei schneiden als offene Hohlprofilabschnitte ausgebildete Rahmenschenkel wesentlich schlechter ab als geschlossene Hohlprofilabschnitte.

Die DE-U-29623065 und die EP-A-0751595 offenbaren einen Rahmenschenkel für ein Rahmengestell eines Schaltschrankes entsprechend dem Stand der Technik.

Es ist Aufgabe der Erfindung, einen Rahmenschenkel für ein Rahmengestell eines Schaltschrankes zu schaffen, der insbesondere in der Verwendung als vertikaler Rahmenschenkel die für universelle Befestigungsmöglichkeiten ausreichend hohe Festigkeit bei geringem Materialaufwand und einfacher Herstellbarkeit die gestellten Anforderungen optimal erfüllt.

Diese Aufgabe wird durch einen Rahmenschenkel für ein Rahmengestell eines Schaltschrankes mit den Merkmalen der unabhängigen Ansprüche 1 und 2 gelöst.

Der von den rechtwinklig aufeinanderstoßenden Außenseiten des Rahmengestelles ausgehende, als Verbindungsabschnitt ausgebildete Profilaußenteil läßt im Bereich der Außeneckkante genügend Freiraum, um die Anforderungen zum Anlenken einer Schranktür und zur Abdichtung der anzubringenden Seitenwände, Rückwand oder Schranktür zu erfüllen.

Die Befestigungsabschnitte und die Profilseiten der Profilinnenseite stellen unterschiedliche Befestigungsebenen in verschiedenen Richtungen dar, wobei mit der Wahl der ersten und zweiten Winkel ihre Ausrichtung im Bezug auf die Außenseiten des Rahmengestelles festgelegt werden kann. Darüberhinaus läßt sich mit der Wahl dieser Winkel auch die Verwindungssteifigkeit des Rahmenschenkels optimieren und der Materialaufwand reduzieren. Außerdem bilden die einander zugekehrten Profilseiten eine zum Innenraum des Rahmengestelles hin offene Aufnahme zum Befestigen von Montageschienen, die die Variation in den Befestigungsmöglichkeiten erweitern können.

Die Befestigungsmöglichkeiten lassen sich dadurch verbessern, daß die Befestigungsaufnahmen der Befestigungsabschnitte einen ersten gleichen Abstand zu den Innenkanten aufweisen, sowie daß die Befestigungsaufnahmen der Profilseiten einen zweiten gleichen Abstand zu den Innenkanten aufweisen.

Ist die Ausgestaltung so vereinfacht, daß die ersten Abstände gleich den zweiten Abständen gewählt sind, dann können an allen Befestigungsebenen der Befestigungsabschnitte und Profilseiten einheitlich gestaltete Montageschienen, Anbauteile und dgl. angebracht werden.

Die Verwindungssteifigkeit des Rahmenschenkels läßt sich dadurch erhöhen, daß die Profilseiten miteinander und/oder mit dem Verbindungsabschnitt verbunden sind.

Der Einbau in ein Rahmengestell läßt sich dadurch vereinfachen, daß der Rahmenschenkel zu der zugeordneten Rahmengestelldiagonalen spiegelbildlich ausgebildet ist.

Die ersten und die zweiten Winkel können spitz-, recht- oder stumpfwinklig gewählt werden, und so daß die Befestigungsebenen in verschiedene Richtungen gelegt werden können.

Um den Rahmenschenkel als geschlossenen Hohlprofilabschnitt zu gestalten, ist nach einer Ausgestaltung vorgesehen, daß die Profilseiten direkt oder über einen Übergangsabschnitt miteinander verbunden sind.

Mit dem Übergangsabschnitt oder der direkten Verbindung der Profilseiten mit dem Verbindungsabschnitt des Profilaußenteiles wird dennoch ein großer Spielraum für die Wahl der Winkel zwischen der Außenseite des Rahmengestelles und den Befestigungsabschnitten sowie der Winkel zwischen den Profilseiten und den Befestigungsabschnitten belassen.

Der Übergangsabschnitt zwischen den Profilseiten verläuft parallel zum zugekehrten Teil des Verbindungsabschnittes und kann mit diesem verbunden sein.

Die Befestigungsaufnahmen können als Bohrungen und/oder quadratische oder rechteckförmige Durchbrüche ausgebildet sein und sich in Profillängsrichtung als Reihen mit einheitlicher Teilung erstrecken. Dabei können sich die Befestigungsaufnahmen in den Befestigungsabschnitten und den Profilseiten in der Ausbildung und/oder der Teilung von denen in den Profilseiten unterscheiden.

Nach einer Ausgestaltung kann die Ausrichtung der Befestigungsebenen so ausgeführt sein, daß die Befestigungsabschnitte jeweils parallel zu den nicht anschließenden Profilseiten verlaufen.

Ist die Profilinnenseite mit einem Übergangsabschnitt zwischen den Profilseiten versehen, dann kann zur Erweiterung der Befestigungsmöglichkeiten vorgesehen sein, daß der Übergangsabschnitt mit Befestigungsaufnahmen versehen ist.

Der Rahmenschenkel läßt sich einfach als Abschnitt eines Strangpreßprofiles herstellen.

Eine weitere Herstellungsmöglichkeit für den Rahmenschenkel bietet sich darin, daß er als Stanz-Biege-Teil geformt ist, das vorzugsweise im Bereich der freien Kanten der Profilseiten zusammengeführt ist, oder daß er als Stanz-Biege-Teil geformt ist, das im Bereich des Verbindungsabschnittes zusammengeführt ist.

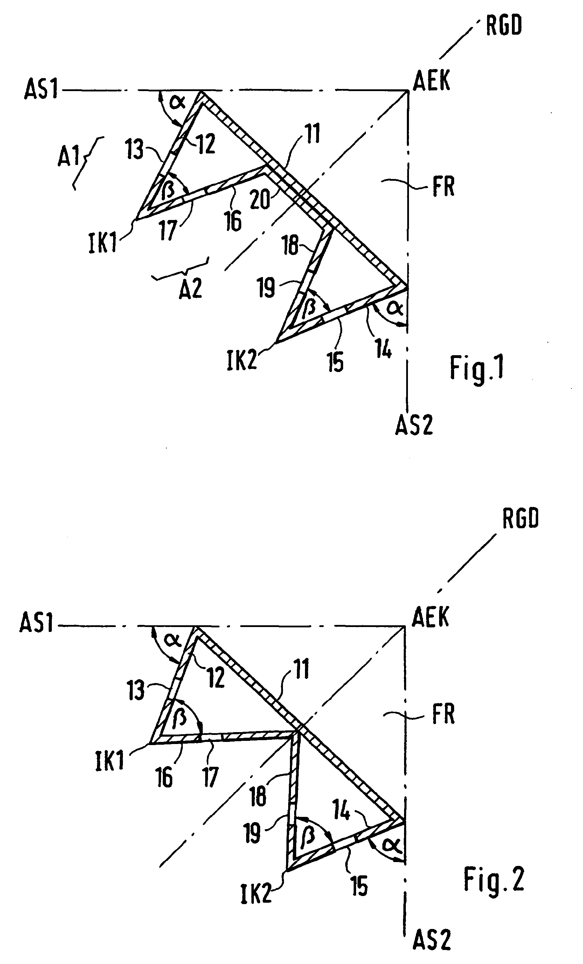

Die Erfindung wird anhand von acht, in den Zeichnungen nach den Fig. 1 bis 8 als Querschitt dargestellten Ausführungsbeispielen von Rahmenschenkeln näher erläutert.

Bei allen Ausführungsbeispielen sind mit AS1 und AS2 die beiden rechtwinklig aufeinanderstoßenden Außenseiten eines Rahmengestelles angedeutet, dessen Rahmengestelldiagonale RGD als Winkelhalbierende eingezeichnet ist. Die beiden Außenseiten AS1 und AS2 bilden eine Außeneckkante AEK, die jedoch nicht vom Rahmenschenkel mit der Profilaußenseite beeinträchtigt wird. Die Profilaußenseite ist als Verbindungsabschnitt 11 bezeichnet, der von den beiden Außenseiten AS1 und AS2 ausgeht und zur Außeneckkante AEK hin einen genügend großen Freiraum FR für die Anlenkung einer Schranktür und die Abdichtung und Einführung der hier zusammenstoßenden Verkleidungselemente, wie Seitenwände, Rückwand, Schranktür, erlaubt. Dabei kann der Verbindungsabschnitt 11 auch anders gestaltet sein, jedoch stets einen Freiraum FR zur Außeneckkante AEK freilassen.

Bei dem Ausführungsbeispiel nach Fig. 1 gehen die Enden des Verbindungsabschnittes 11 im Bereich der Außenseiten AS1 und AS2 in Befestigungsabschnitte 12 bzw. 14 über, die in Profillängsrichtung mit Reihen von Befestigungsaufnahmen 13 bzw. 15 versehen sind und in einem spitzen Winkel α zu der zugekehrten Außenseite AS1 bzw. AS2 stehen. An die Befestigungsabschnitte 12 und 14 schließen sich Profilseiten 16 und 18 an, die ebenfalls mit Reihen von Befestigungsaufnahmen 17 und 19 versehen sind. Die Befestigungsabschnitte 12 und 14 und die Profilseiten 16 und 18 bilden zwei Innenkanten IK1 und IK2. Die Befestigungsaufnahmen 13 und 15 der Befestigungsabschnitte 12 und 14 haben einen ersten Abstand A1 von den Innenkanten IK1 und IK2, während die Befestigungsaufnahmen 17 und 19 der Profilleisten 16 und 18 einen zweiten Abstand A2 von den Innenkanten IK1 und IK2 aufweisen. Der Abstand A1 kann jedoch auch gleich dem Abstand A2 gewählt sein. Die Profilseiten 16 und 18 schließen mit dem anschließenden Befestigungsabschnitt 12 bzw. 14 einen spitzen Winkel β ein. Die den Befestigungsabschnitten 12 und 14 abgekehrten Kanten der Profilseiten 16 und 18 sind über einen Übergangsabschnitt 20 miteinander verbunden. Der Übergangsabschnitt 20 kann parallel zu dem zugekehrten Teil des Verbindungsabschnittes 11 der Profilaußenseite verlaufen und fest mit diesem verbunden sein. Der Übergangsabschnitt 20 kann auch im Abstand parallel zum zugekehrten Teil des Verbindungsabschnittes 11 verlaufen. Bei einem als Stanz-Biege-Teil hergestellten Rahmenschenkel dieser Art kann der Übergangsabschnitt 20 aus zwei sich überlappenden Endabschnitten bestehen, die sich an die Profilseiten 16 und 18 anschließen. Die Stoß- und Verbindungsstelle kann sich auch im Bereich des Verbindungsabschnittes 11 befinden. Die Befestigungsaufnahmen 13 und 15 der Befestigungsabschnitte 12 und 14 können gleich ausgebildet und ausgerichtet sein wie die Befestigungsaufnahmen 17 und 19 der Profilseiten 16 und 18. Sie können sich jedoch auch in der Ausbildung, der Ausrichtung und der Teilung von diesen unterscheiden. Der Winkel α kann gleich groß wie der Winkel β gewählt werden.

Bei den Rahmenschenkeln nach Fig. 2 unterscheiden sich die Winkel α und β deutlich vom Ausführungsbeispiel nach Fig. 1, da die Profilseiten 16 und 18 direkt zusammenstoßen und mit dem Verbindungsabschnitt 11 mittig verbunden sind. Auch der Rahmenschenkel nach Fig,. 2 ist spiegelbildlich zur Rahmengestelldiagonalen RGD ausgebildet. Die Abstände der Befestigungsaufnahmen 13 und 17 von der Innenkante IK1 entsprechen den Abständen der Befestigungsaufnahmen 15 und 19 von der Innenkante IK2. Durch Verkürzung des Verbindungsabschnittes 11 kann der Freiraum FR zur Außeneckkante AEK verkleinert werden. Die Befestigungsabschnitte 12 und 14 können gleich breit wie die Profilseiten 16 und 18 und halb so breit wie der Verbindungsabschnitt 11 ausgelegt werden, so daß die beiden Hohlräume des Rahmenschenkels gleichschenklige oder gleichseitige Dreiecke bilden.

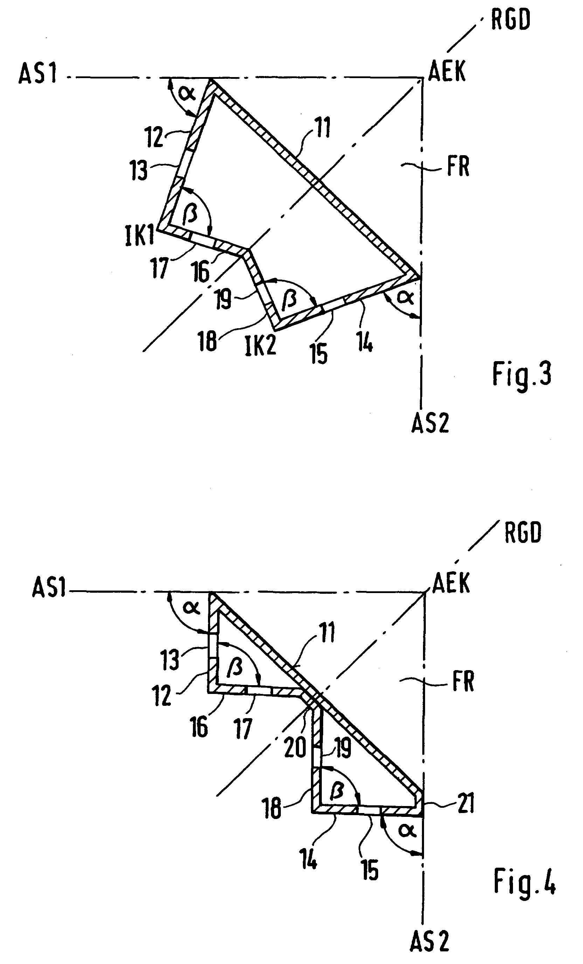

Wie anhand des Ausführungsbeispieles nach Fig. 3 gezeigt ist, können die Profilseiten 16 und 18 auch im Abstand von dem Verbindungsabschnitt 11 direkt miteinander verbunden sein. Bei einem als Stanz-Biege-Teil ausgehenden Rahmenschenkel dieser Art empfiehlt es sich, die Stoß- und Verbindungsstelle in den Bereich des Verbindungsabschnittes 11 zu legen. Der Winkel α kann spitzwinklig und der Winkel β stumpfwinklig gewählt werden. Die Abstände A1 und A2 der Befestigungsaufnahmen von den Innenkanten IK1 und IK2 sind unterschiedlich.

Beim Ausführungsbeispiel nach Fig. 4 stehen die Befestigungsabschnitte 12 und 14 senkrecht zu den zugekehrten Außenseiten AS1 und AS2 und die Profilseiten 16 und 18 stehen senkrecht zu den Befestigungsabschnitten 12 und 14, d. h. α=β=90°. Hier empfiehlt es sich, die Abstände der Befestigungsaufnahmen 13, 15, 17 und 19 zu der zugeordneten Innenkante IK1 bzw. IK2 gleich groß zu wählen. Dabei können die Profilseiten 16 und 18 direkt oder über einen Übergangsabschnitt 20 miteinander und/oder mit dem Verbindungsabschnitt 11 verbunden werden. Die Profilaußenseite kann einen Anlageabschnitt 21 aufweisen, der an der zugekehrten Außenseite AS2 anliegt und den Übergang vom Verbindungsabschnitt 11 der Profilaußenseite zum Befestigungsabschnitt 14 der Profilinnenseite übernimmt.

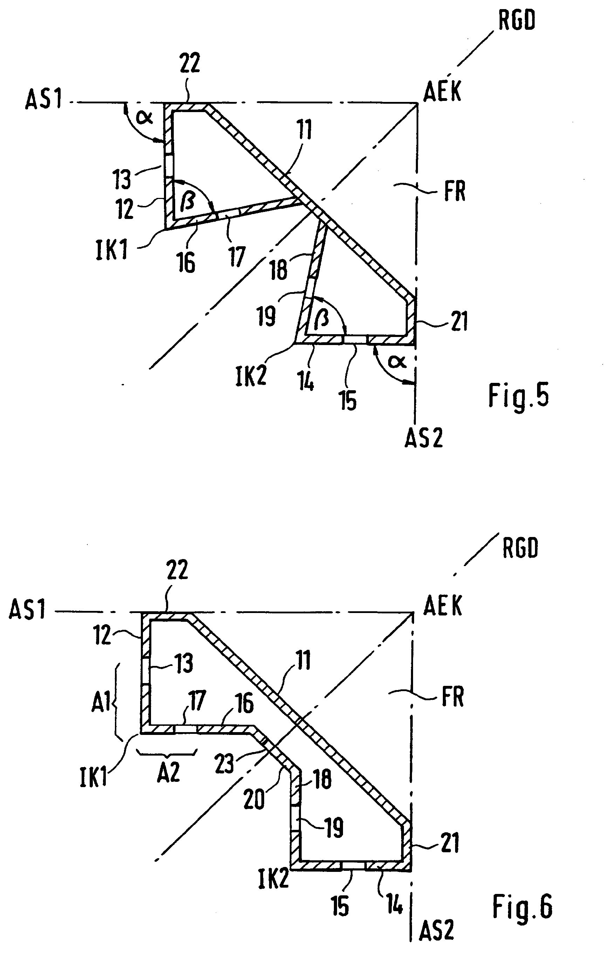

Beim Ausführungsbeispiel nach Fig. 5 gehen beide Enden des Verbindungsabschnittes 11 über Anlageabschnitte 21 und 22 in die Befestigungsabschnitte 14 und 12 der Profilinnenseite über. Die Befestigungsabschnitte 12 und 14 stehen senkrecht zu diesen Anlageabschnitten 22 und 21, d. h. α=90°. Die Profilseiten 16 und 18 schließen in einem spitzem Winkel β an die Befestigungsabschnitte 12 und 14 an und sind direkt mit dem Verbindungsabschnitt 11 verbunden. Die Befestigungsaufnahmen 13, 15, 17 und 19 haben den gleichen Abstand von der zugeordneten Innenkante IK1 bzw. IK2.

Bei dem Rahmenschenkel nach Fig. 6 stehen die Profilseiten 16 und 18 senkrecht zu den anschließenden Befestigungsabschnitten 12 und 14, d. h. α=β=90°. Die Profilseiten 16 und 18 sind über einen Übergangsabschnitt 20 miteinander verbunden, der im Abstand parallel zum Verbindungsabschnitt 11 verläuft, und mit zusätzlichen Befestigungsaufnahmen 23 versehen sein kann. Die Breiten der Befestigungsabschnitte 12 und 14 sowie der Profilseiten 16 und 18 können auch gleich groß gewählt sein und die Anlagestege 21 und 22 können so dimensioniert werden, daß der Übergangsabschnitt 20 oder die Profilseiten 16 und 18 direkt mit dem Verbindungsabschnitt 11 verbunden werden können.

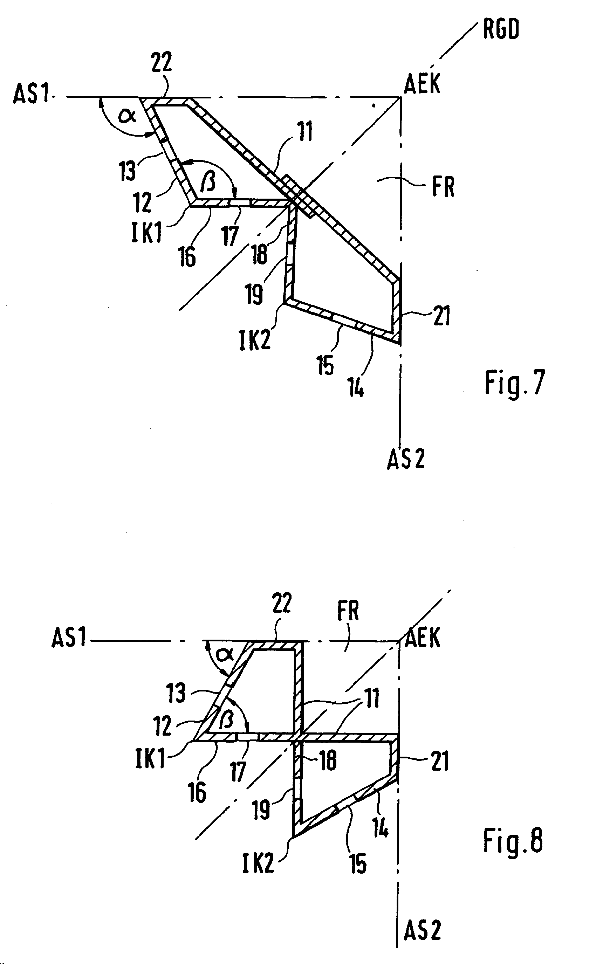

Fig. 7 zeigt einen Rahmenschenkel, bei dem die Winkel α und β stumpfwinklig sind. Dabei sind die Anlageabschnitte 21 und 22 so angepaßt, daß sich die miteinander verbundenen Profilseiten 16 und 18 auf dem Verbindungsabschnitt 11 zumindest abstützen oder mit diesem verbunden werden können. Der Verbindungsabschnitt 11 kann im Bereich der Abstütz- oder Verbindungsstelle zusammengeführt sein und sich überlappen.

Wie die Fig. 8 zeigt, muß der Verbindungsabschnitt 11 nicht geradlinig verlaufen, er kann auch treppenstufig ausgebildet sein oder von den Anlageabschnitten 21 und 22 ausgehend beliebig verlaufen, wenn er nur zur Außeneckkante AEK hin genügend Freiraum FR läßt. Die Befestigungsabschnitte 12 und 14 stehen im spitzen Winkel α zu den Außenseiten AS1 und AS2 und die Profilseiten 16 und 18 schließen sich im spitzen Winkel β an die Befestigungsabschnitte 12 und 14 an. Die Profilseiten 16 und 18 stehen senkrecht zueinander und verlaufen parallel zu ihren zugeordneten Außenseiten AS1 und AS2. Die Profilseiten 16 und 18 treffen im Bereich der Rahmengestelldiagonalen RGD auf die Ecke des treppenförmigen Verbindungsabschnittes 11 und können mit dieser fest verbunden sein.

Wie Fig. 4 zeigt, muß der Querschnitt des Rahmenprofiles sowohl im Bereich der Profilaußenseite als auch im Bereich der Profilinnenseite nicht zwangsläufig spiegelbildlich zur Rahmengestelldiagonalen RGD ausgelegt sein. Es sind auch unsymmetrische Auslegungen denkbar, wenn an die Befestigungsmöglichkeiten und Befestigungsrichtungen besondere Anforderungen gestellt sind.

## Patentansprüche

1. Rahmenschenkel für ein Rahmengestell eines Schaltschrankes, mit einer Profilaußenseite als Verbindungsabschnitt (11) zwischen rechtwinklig aufeinander stoßenden Außenseiten (AS1, AS2) des Rahmengestelles, wobei an den Verbindungsabschnitt (11) Befestigungsabschnitte (12,14) einer Profilinnenseite angeschlossen sind, die in Profillängsrichtung mit Befestigungsaufnahmen (13, 15) versehen sind und in ebenfalls mit Befestigungsaufnahmen (17,19) versehene Profilseiten (16, 18) übergehen, wobei die Befestigungsabschnitte (12,14) in einem ersten Winkel (α) zu den Außenseiten (AS1, AS2) des Rahmengestelles und die Profilseiten (16, 18) jeweils in einem zweiten Winkel (β) zu dem anschließenden Befestigungsabschnitt (12 bzw. 14) stehen, wobei die Befestigungsabschnitte (12,14) und die Profilseiten (16,18) zwei Innenkanten (IK1, IK2) der Profilinnenseite bilden, wobei die Befestigungsaufnahmen (13, 15) der Befestigungsabschnitte (12, 14) einen ersten gleichen Abstand (A1) zu den Innenkanten (IK1, Ik2) aufweisen, wobei die Befestigungsaufnahmen (17, 19) der Profilseiten (16, 18) einen zweiten gleichen Abstand (A2) zu den Innenkanten (IK1, IK2) aufweisen,
**dadurch gekennzeichnet,**
**dass** die ersten Abstände (A1) gleich den zweiten Abständen (A2) gewählt sind, und
**dass** die Profilsseiten (16,18) unmittelbar auf den Verbindungsabschnitt (11) stoßen und mit diesem verbunden sind.

2. Rahmenschenkel für ein Rahmengestell eines Schaltschrankes, mit einer Profilaußenseite als Verbindungsabschnitt (11) zwischen rechtwinklig aufeinander stoßenden Außenseiten (AS1,AS2) des Rahmengestelles, wobei an den Verbindungsabschnitt (11) Befestigungsabschnitte (12,14) einer Profilinnenseite angeschlossen sind, die in Profillängsrichtung mit Befestigungsaufnahmen (13,15) versehen sind und in ebenfalls mit Befestigungsaufnahmen (17,19) versehene Profilseiten (16, 18) übergehen, wobei die Befestigungsabschnitte (12,14) in einem ersten Winkel (α) zu den Außenseiten (AS1,AS2) des Rahmengestelles und die Profilseiten (16, 18) jeweils in einem zweiten Winkel (β) zu dem anschließenden Befestigungsabschnitt (12 bzw. 14) stehen, wobei die Befestigungsabschnitte (12,14) und die Profilseiten (16,18) zwei Innenkanten (lK1,lK2) der Profilinnenseite bilden, wobei die Befestigungsaufnahmen (13,15) der Befestigungsabschnitte (12,14) einen ersten gleichen Abstand (A1) zu den Innenkanten (IK1,Ik2) aufweisen, wobei die Befestigungsaufnahmen (17,19) der Profilseiten (16,18) einen zweiten gleichen Abstand (A2) zu den Innenkanten (IK1,IK2) aufweisen,
**dadurch gekennzeichnet,**
**dass** die ersten Abstände (A1) gleich den zweiten Abständen (A2) gewählt sind,
**dass** die Profilseiten (16, 18) über einen Übergangsabschnitt (20) miteinander verbunden sind, und
**dass** der Übergangsabschnitt (20) parallel beabstandet zum Verbindungsabschnitt (11) verläuft.

3. Rahmenschenkel nach einem der Ansprüche 1 oder 2,
**dadurch gekennzeichnet,**
**dass** er zu der zugeordneten Rahmengestelldiagonalen (RGD) spiegel-bildlich ausgebildet ist.

4. Rahmengestell nach einem der Ansprüche 1 bis 3,
**dadurch gekennzeichnet,**
**dass** ersten Winkel (α) spitz-, recht- oder stumpfwinklig gewählt sind.

5. Rahmengestell nach einem der Ansprüche 1 bis 4,
**dadurch gekennzeichnet,**
**dass** die zweiten Winkel (β) spitz-, recht- oder stumpfwinklig gewählt sind.

6. Rahmenschenkel nach einem der Ansprüche 1 bis 5,
**dadurch gekennzeichnet,**
**dass** die Befestigungsaufnahmen (13, 15, 17, 19) der Befestigungsabschnitte (12, 14) und der Profilseiten (16, 18) als Bohrungen und/oder als quadratische oder rechteckförmige Durchbrüche ausgebildet sind.

7. Rahmenschenkel nach einem der Ansprüche 1 bis 6,
**dadurch gekennzeichnet,**
**dass** die Befestigungsaufnahmen (13, 15, 17, 19) in Profillängsrichtung als Reihen mit einheitlicher Teilung in die Befestigungsabschnitte (12, 14) und die Profilseiten (16, 18) eingebracht sind.

8. Rahmenschenkel nach einem der Ansprüche 1 bis 7,
**dadurch gekennzeichnet,**
**dass** die Befestigungsaufnahmen (13, 15) der Befestigungsabschnitte (12, 14) sich in der Ausbildung und/oder Teilung von den Befestigungsaufnahmen (17, 19) der Profilseiten (16, 18) unterscheiden.

9. Rahmenschenkel nach einem der Ansprüche 1 bis 8,
**dadurch gekennzeichnet,**
**dass** die Befestigungsabschnitte (12, 14) jeweils parallel zu den nicht anschließenden Profilseiten (18 bzw. 16) verlaufen.

10. Rahmenschenkel nach einem der Ansprüche 1 bis 9,
**dadurch gekennzeichnet,**
**dass** der Übergangsabschnitt (20) mit Befestigungsaufnahmen (23) versehen ist.

11. Rahmenschenkel nach einem der Ansprüche 1 bis 10,
**dadurch gekennzeichnet,**
**dass** er als Abschnitt eines Strangpreßprofiles ausgebildet ist.

12. Rahmenschenkel nach einem der Ansprüche 1 bis 11,
**dadurch gekennzeichnet,**
**dass** er als Stanz-Biege-Teil geformt ist, das vorzugsweise im Bereich der freien Kanten der Profilseiten (16, 18) zusammengeführt ist.

13. Rahmenschenkel nach einem der Ansprüche 1 bis 12,
**dadurch gekennzeichnet,**
**dass** er als Stanz-Biege-Teil geformt ist, das im Bereich des Verbindungsabschnittes (11) zusammengeführt ist.

## Claims

1. Frame leg for a framework of a switchgear cabinet, having a profile outer side as a connecting section (11) between outer sides (AS1, AS2) of the framework which butt against one another at a right angle, with fastening sections (12, 14) of a profile inner side being connected to the connecting section (11), which fastening sections are provided with fastening mounts (13, 15) in the longitudinal direction of the profile and merge with profile sides (16, 18) which are likewise provided with fastening mounts (17, 19), with the fastening sections (12, 14) being situated at a first angle (α) in relation to the outer sides (AS1, AS2) of the framework and the profile sides (16, 18) each being situated at a second angle (β) in relation to the adjoining fastening section (12 or 14), with the fastening sections (12, 14) and the profile sides (16, 18) forming two inner edges (IK1, IK2) of the profile inner side, with the fastening mounts (13, 15) of the fastening sections (12, 14) being at a first equal distance (A1) from the inner edges (IK1, IK2), with the fastening mounts (17, 19) of the profile sides (16, 18) being at a second equal distance (A2) from the inner edges (IK1, IK2),
**characterized**
**in that** the first distances (A1) are chosen to be equal to the second distances (A2), and
**in that** the profile sides (16, 18) directly abut the connecting section (11) and are connected to the latter.

2. Frame leg for a framework of a switchgear cabinet, having a profile outer side as a connecting section (11) between outer sides (AS1, AS2) of the framework which butt against one another at a right angle, with fastening sections (12, 14) of a profile inner side being connected to the connecting section (11), which fastening sections are provided with fastening mounts (13, 15) in the longitudinal direction of the profile and merge with profile sides (16, 18) which are likewise provided with fastening mounts (17, 19), with the fastening sections (12, 14) being situated at a first angle (α) in relation to the outer sides (AS1, AS2) of the framework and the profile sides (16, 18) each being situated at a second angle (β) in relation to the adjoining fastening section (12 or 14), with the fastening sections (12, 14) and the profile sides .(16, 18) forming two inner edges (IK1, IK2) of the profile inner side, with the fastening mounts (13, 15) of the fastening sections (12, 14) being at a first equal distance (A1) from the inner edges (IK1, IK2), with the fastening mounts (17, 19) of the profile sides (16, 18) being at a second equal distance (A2) from the inner edges (IK1, IK2),
**characterized**
**in that** the first distances (A1) are chosen to be equal to the second distances (A2),
**in that** the profile sides (16, 18) are connected to one another by means of a transition section (20), and
**in that** the transition section (20) runs parallel to and at a distance from the connecting section (11).

3. Frame leg according to either of Claims 1 and 2,
**characterized**
**in that** the said frame leg is designed with mirror-image symmetry with respect to the associated framework diagonals (RGD).

4. Frame leg according to one of Claims 1 to 3,
**characterized**
**in that**
the first angle (α) is chosen to be an acute angle, a right angle or an obtuse angle.

5. Frame leg according to one of Claims 1 to 4,
**characterized**
**in that**
the second angle (β) is chosen to be an acute angle, a right angle or an obtuse angle.

6. Frame leg according to one of Claims 1 to 5,
**characterized**
**in that** the fastening mounts (13, 15, 17, 19) of the fastening sections (12, 14) and of the profile sides (16, 18) are designed as holes and/or as square or rectangular apertures.

7. Frame leg according to one of Claims 1 to 6,
**characterized**
**in that** the fastening mounts (13, 15, 17, 19) in the longitudinal direction of the profile are made in the fastening mounts (12, 14) and the profile sides (16, 18) in the form of rows with uniform spacing.

8. Frame leg according to one of Claims 1 to 7,
**characterized**
**in that** the fastening mounts (13, 15) of the fastening sections (12, 14) differ from the fastening mounts (17, 19) of the profile sides (16, 18) in terms of design and/or spacing.

9. Frame leg according to one of Claims 1 to 8,
**characterized**
**in that** the fastening sections (12, 14) each run parallel to the non-adjoining profile sides (18 or 16).

10. Frame leg according to one of Claims 1 to 9,
**characterized**
**in that** the transition section (20) is provided with fastening mounts (23).

11. Frame leg according to one of Claims 1 to 10,
**characterized**
**in that** the said frame leg is designed as a section of an extruded profile.

12. Frame leg according to one of Claims 1 to 11,
**characterized**
**in that** the said frame leg is formed as a stamped and bent part which is preferably brought together in the region of the free edges of the profile sides (16, 18).

13. Frame leg according to one of Claims 1 to 12,
**characterized**
**in that** the said frame leg is formed as a stamped and bent part which is preferably brought together in the region of the connecting section (11).

## Revendications

1. Montant pour le châssis d'une armoire de distribution, avec un côté extérieur de profilé comme partie d'assemblage (11) entre des côtés extérieurs (AS1, AS2) joints perpendiculairement l'un à l'autre du châssis, dans lequel des parties de fixation (12, 14) d'un côté intérieur de profilé sont raccordés à la partie d'assemblage (11), lesquelles sont pourvues de logements de fixation (13, 15) dans la direction longitudinale du profilé et se prolongent par des côtés de profilé (16, 18) également pourvus de logements de fixation (17, 19), dans lequel les parties de fixation (12, 14) forment un premier angle (α) avec les côtés extérieurs (AS1, AS2) du châssis et les côtés de profilé (16, 18) forment respectivement un deuxième angle (β) avec la partie de fixation adjacente (12 ou selon le cas 14), dans lequel les parties de fixation (12, 14) et les côtés de profilé (16, 18) forment deux arêtes intérieures (IK1, IK2) du côté intérieur de profilé, dans lequel les logements de fixation (13, 15) des parties de fixation (12, 14) présentent une même première distance (A1) par rapport aux arêtes intérieures (IK1, IK2), dans lequel les logements de fixation (17, 19) des côtés de profilé (16, 18) présentent une même deuxième distance (A2) par rapport aux arêtes intérieures (IK1, IK2), **caractérisé en ce que** les premières distances (A1) sont choisies égales aux deuxièmes distances (A2) et **en ce que** les côtés de profilé (16, 18) touchent directement la partie d'assemblage (11) et sont assemblés à celle-ci.

2. Montant pour le châssis d'une armoire de distribution, avec un côté extérieur de profilé comme partie d'assemblage (11) entre des côtés extérieurs (AS1, AS2) joints perpendiculairement l'un à l'autre du châssis, dans lequel des parties de fixation (12, 14) d'un côté intérieur de profilé sont raccordés à la partie d'assemblage (11), lesquelles sont pourvues de logements de fixation (13, 15) dans la direction longitudinale du profilé et se prolongent par des côtés de profilé (16, 18) également pourvus de logements de fixation (17, 19), dans lequel les parties de fixation (12, 14) forment un premier angle (α) avec les côtés extérieurs (AS1, AS2) du châssis et les côtés de profilé (16, 18) forment respectivement un deuxième angle (β) avec la partie de fixation adjacente (12 ou selon le cas 14), dans lequel les parties de fixation (12, 14) et les côtés de profilé (16, 18) forment deux arêtes intérieures (IK1, IK2) du côté intérieur de profilé, dans lequel les logements de fixation (13, 15) des parties de fixation (12, 14) présentent une même première distance (A1) par rapport aux arêtes intérieures (IK1, IK2), dans lequel les logements de fixation (17, 19) des côtés de profilé (16, 18) présentent une même deuxième distance (A2) par rapport aux arêtes intérieures (IK1, IK2), **caractérisé en ce que** les premières distances (A1) sont choisies égales aux deuxièmes distances (A2), **en ce que** les côtés de profilé (16, 18) sont reliés l'un à l'autre par une partie de jonction (20) et **en ce que** la partie de jonction (20) est parallèle à distance à la partie d'assemblage (11).

3. Montant selon l'une quelconque des revendications 1 ou 2, **caractérisé en ce qu'**il présente une forme symétrique par réflexion par rapport à la diagonale associée du châssis (RGD).

4. Montant selon l'une quelconque des revendications 1 à 3, **caractérisé en ce que** les premiers angles (α) ont été choisis aigus, droits ou obtus.

5. Montant selon l'une quelconque des revendications 1 à 4, **caractérisé en ce que** les deuxièmes angles (β) ont été choisis aigus, droits ou obtus.

6. Montant selon l'une quelconque des revendications 1 à 5, **caractérisé en ce que** les logements de fixation (13, 15, 17, 19) des parties de fixation (12, 14) et des côtés de profilé (16, 18) sont des trous forés et/ou des passages carrés ou rectangulaires.

7. Montant selon l'une quelconque des revendications 1 à 6, **caractérisé en ce que** les logements de fixation (13, 15, 17, 19) sont pratiqués dans les parties de fixation (12, 14) et les côtés de profilé (16, 18) en ligne avec un pas unitaire dans la direction longitudinale du profilé.

8. Montant selon l'une quelconque des revendications 1 à 7, **caractérisé en ce que** les logements de fixation (13, 15) des parties de fixation (12, 14) se distinguent par leur forme et/ou leur pas des logements de fixation (17, 19) des côtés de profilé (16, 18).

9. Montant selon l'une quelconque des revendications 1 à 8, **caractérisé en ce que** les parties de fixation (12, 14) sont chaque fois parallèles aux côtés de profilé non adjacents (18 ou selon le cas 16).

10. Montant selon l'une quelconque des revendications 1 à 9, **caractérisé en ce que** la partie de jonction (20) est pourvue de logements de fixation (23).

11. Montant selon l'une quelconque des revendications 1 à 10, **caractérisé en ce qu'**il est constitué par une section d'un profilé extrudé.

12. Montant selon l'une quelconque des revendications 1 à 11, **caractérisé en ce qu'**il est formé par une pièce découpée et pliée, qui est jointe de préférence dans la région des arêtes libres des côtés de profilé (16, 18).

13. Montant selon l'une quelconque des revendications 1 à 12, **caractérisé en ce qu'**il est formé par une pièce découpée et pliée, qui est jointe dans la région de la partie d'assemblage (11).
